# EUROPEAN PATENT SPECIFICATION

(11) **EP 2 757 856 B1**
(45) Date of publication and mention of the grant of the patent: **08.11.2023**
(21) Application number: 13290012.7
(22) Date of filing: 17.01.2013
(51) Int. Cl.: H04W 76/27, H04W 8/18, H04W 8/26, H04W 4/00

(54) **OPTIMIZATION OF CONTEXT AND/OR CONNECTION MANAGEMENT IN A MOBILE COMMUNICATION SYSTEM**
OPTIMIERUNG VON KONTEXT- UND/ODER VERBINDUNGSVERWALTUNG IN EINEM MOBILEN KOMMUNIKATIONSSYSTEM
OPTIMISATION DE CONTEXTE ET/OU GESTION DE CONNEXIONS DANS UN SYSTÈME DE COMMUNICATION MOBILE

(43) Date of publication of application: 23.07.2014
(73) Proprietor: Alcatel Lucent, 91620 Nozay (FR)
(72) Inventor: Palat, Sudeep, Swindon, WI SN5 7DJ (GB); Casati, Alessio, Swindon, WI SN5 7DJ (GB)
(74) Representative: Page White Farrer

(56) References cited:
- WO-A1-2011/051753
- WO-A1-2012/034580
- US-A1- 2012 329 458
- IPWIRELESS INC: "On Retaining RRC Context", 3GPP DRAFT; R2-121550 ON RETAINING RRC CONTEXT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 19 March 2012 (2012-03-19), XP050606026, [retrieved on 2012-03-19]
- RESEARCH IN MOTION UK LIMITED: "RRC connection behaviour for background traffic", 3GPP DRAFT; R2-115245, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540829, [retrieved on 2011-10-03]

## Description

The present disclosure generally relates to mobile communication networks and systems.

Detailed descriptions of mobile communication networks and systems can be found in the literature, such as in particular in Technical Specifications published by standardization bodies such as for example 3GPP (3^{rd} Generation Partnership Project).

In general, in such systems, an User Equipment (UE) has access to a mobile network comprising a Core Network (CN) accessed by a Radio Access Network (RAN).

Examples of packet mobile communication systems include EPS (Evolved Packet System) also called LTE system, UMTS, ...etc.

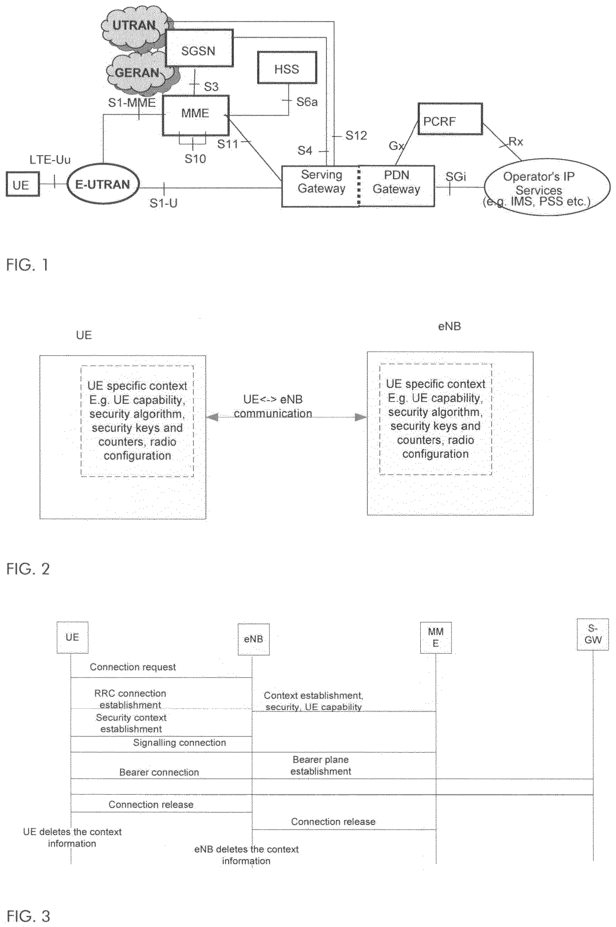

EPS network, for example, comprises a Core Network called EPC (Evolved Packet Core) that can be accessed by a Radio Access Network called E-UTRAN. An example of architecture of EPS network is recalled in figure 1 (taken from 3GPP TS 23.401), showing the main network nodes and interfaces between network nodes. Interfaces between EPS network nodes include, in particular, LTE-Uu interface between UE and E-UTRAN node called eNodeB (eNB), S1-MME interface between eNB and EPC node called Mobility Management Entity (MME), and S1-U interface between eNB and EPC node called Serving Gateway (SGW).

Document IPWIRELESS INC "On Retaining RRC Context", 3GPP DRAFT; R2-121550 ON RETAINING RRC CONTEXT, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX FRANCE, vol. RAN WG2, no. Jeju, Korea; 20120326-201210330, 19 March 2021 (2012-03-19), XP050606026, provides technological background.

Document WO 2012/034580 A1 also represents an example of the prior art.

When an UE is active (or in a state referred to as connected state wherein user data can be transmitted), connections are established over different interfaces of the network, and contexts (also called UE contexts) are established in different nodes of the network, storing information required for user data transmission for the UE such as security-related information, ...etc). In particular a connection referred to as RRC connection is established between UE and eNB and at the same time an EMM connection is also established between UE and MME as well as a connection between MME and eNB (S1-MME). UE contexts are established in the UE and the eNB, storing information, such as security context transferred between MME and eNB, , required for user data transmission for the UE.

When the UE is no longer active (or in a state referred to as idle state wherein no user data is transmitted), connections are released and information stored

in contexts is deleted. In particular, the RRC connection, EMM connection and the connection between MME and eNB are released and the UE context in the UE and in the eNB is deleted.

When the UE becomes active again (or is moving back from idle to connected state), released connections and deleted context information need to be re-established. In particular, the RRC and EMM connections along with connection between MME and eNB and the UE context in the UE and in the eNB need to be re-established.

A significant amount of signaling, in particular over LTE-Uu and S1-MME interfaces, is needed for such re-establishment, during a procedure called Service Request procedure, as currently specified by 3GPP. In particular, within the Service Request procedure, a significant amount of signaling is needed for re-establishment of RRC connection, and for re-establishing a security context between UE and eNB.

New types of communications, such as Machine Type Communication (MTC) or other mobile data applications communications are becoming increasingly used. Such new types of communications have new service requirements, e.g. transmission of small amounts of data, frequent UE state transitions from idle to active, ...etc. New functionalities are therefore needed for efficiently supporting such new service requirements with minimal network impact (e.g. in terms of signalling overhead).

As solution, the present invention provides subject-matter according to the independent claims, preferred embodiments thereof being defined in the dependent claims. The invention is defined in the claims. It will be understood that aspects of the disclosure falling within the scope of the claims are part of the invention whereas aspects of the disclosure falling outside the scope of the claims are not part of the invention.

Some examples of apparatus and/or methods in accordance with examples of the present disclosure are now described, by way of example only, and with reference to the accompanying drawings, in which:
- Figure 1 is intended to recall an example of architecture for EPS network,
- Figure 2 is intended to illustrate information which may be stored in an UE context in the UE and in the eNB,
- Figure 3 is intended to illustrate, in a simplified way, connection (re)-establishment as currently used in a system such as EPS,
- Figure 4 is intended to illustrate, in a simplified way, connection (re)-establishment in a system such as EPS, according to examples of the present disclosure,
- Figure 5 is intended to illustrate, in a simplified way, connection (re)-establishment in a system such as EPS, according to examples of the present disclosure,
- Figure 6 is intended to illustrate a Service Request procedure as currently used for connection re-establishment, for example in the context of connectionless data transmission,
- Figure 7 is intended to illustrate an initialization procedure to provide the token id to the UE that is required for connection re-establishment according to examples of the present disclosure, for example in the context of connectionless data transmission,
- Figure 8 is intended to illustrate a procedure for connection re-establishment according to examples of the present disclosure, for example in the context of connectionless data transmission,
- Figure 9 is intended to illustrate another procedure for connection re-establishment according to examples of the present disclosure, for example in the context of connectionless data transmission.

Examples of the present disclosure will be more detailed in the following, by way of example for 3GPP systems such as EPS. However it should be understood that the present disclosure is not limited to EPS, and could apply as well to 3GPP systems other than EPS, or to systems specified by standardization bodies other than 3GPP.

In LTE, as with many other wireless systems, the network and the device maintains some state information (often known as "context"). When the UE is in active communication, it is said to be in "RRC connected" state and some of the information stored in the UE and RAN network contexts is shown in the figure 2. In the example illustrated in figure 2, an UE context includes: UE capability, security-related information (security algorithm, security keys and counters), radio configuration.

This RAN context is released (all information is deleted) when the UE releases the RRC connection. Figure 3 shows, in a simplified way, the signaling for the normal connection establishment and that eNB and UE deletes the context when the connection is released.

Following steps are illustrated in figure 3:
- Connection request sent by UE to eNB
- RRC connection establishment between UE and eNB, and context establishment at eNB, involving signaling between eNB and MME
- Security context establishment between UE and eNB
- Signaling connection established between UE and MME
- Bearer established between UE and eNB
- Bearer establishment between eNB and SGW
- RRC connection release
- Release of connection between eNB and MME
- UE deletes context information
- eNB deletes context information.

LTE is a connection oriented system. When the UE is not transferring any data, the connections are released and with that the related security context in the eNB. These have to be then re-established via the Service Request procedure when UE has any data to send. There are three connections involved - the RRC connection, S1-MME connection between eNB and MME and S1-U connection between eNB and Serving Gateway (S-GW). This re-establishment of the connections is signalling intensive both in terms of the number of signalling messages and also in terms of the number of bits. For the transfer of a few bytes of user data, the overheads in terms of the number of the bytes can sometimes exceed 200%. It is hence desirable to avoid this overhead.

One possible solution would be to provide the eNB context to the UE when the connection is released and the UE provides it back again to the network when it re-establishes the connection. This has some limitations in that it primarily only works when the UE comes back into the same eNB and is secured using some form of UE-ENB security association (which is creating therefore a "chicken and egg" situation). Further, providing the info to the UE brings some security risks. It is also involves transfer of additional information for every connection which is counter to the original objective of reducing overheads for the connection.

Another possible solution would be to do security in the S-GW so the same security material is used for all the eNB's served by the SGW for a specific UE. This is a big change to the security architecture and may not be acceptable from the impact to S-GW implementations.

Examples of the present disclosure in particular avoid such drawbacks. Various examples of the present disclosure will be described hereinafter.

In an example, it is proposed to have the UE and the RAN network (eNB) store the UE contexts when the UE releases the connection. The UE stores this context per cell with capability to store several contexts, one for each cell it visits. In its simplest form the Ue stores the context for one cell - the cell it was last connected to. This could typically happen when the connection is released. The eNB also stores the context for several UEs so that it can serve them when they come back to it.

The information stored in the eNB in the UE context may include amongst others, the UE capability exchanged, security keys, security state information such as sequence numbers, last used radio configuration, and even the uplink TEID and IP address of the SGW used for the bearers (see below).

In an example, a unique identifier can be exchanged between the UE and eNB to identify the specific UE's context. This identifier is provided to the UE during the last connection in a cell. The UE provides this back to the network when it comes back to it and establishes a "connection" with it. This identifies the UE context in the eNB which is re-used for the communication.

In an example, on the network side, the S1-U connection information can be retained. This can then be used to varying degrees -such as maintaining GTP bearer or re-creating it when UE goes connected (e.g. by inserting the value of the DL TEID in the UL GTP-U PDU's to the SGW in an extension header).

When the UE moves to another eNB and it enters active state, the S1-U information may be removed from the last eNB so that the current SGW is selected if the SGW is relocated. However, in a deployment scenario where the SGW is never relocated, the S1-U information may be kept for as long as the security context is kept.

A benefit of such approach is that there is minimal signalling overhead associated with the connection establishment. The context last used is simply revived and continued using just the context identifier. No connection is established with the MME - either between UE and MME or between eNB and MME.

This is especially efficient for short bursts of user data. The UE can go back to Idle after this burst of data.

In an example, the contexts can be cleared by some clean up operation which could be based on time (known to the eNB and the UE, so that a context can be retained up to a maximum "age"), maximum number of contexts stored (so the older contexts is overwritten by fresher UE contexts when a maximum context capacity is reached) etc.

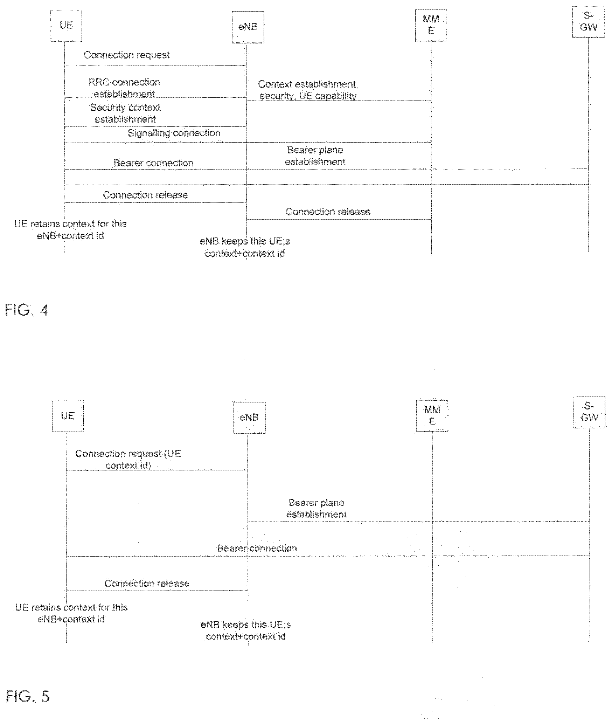

In an example, the UE and the eNB maintains the context information even after the UE connection is released. The message flow in figure 4 shows the normal connection establishment signaling, and that when the connection is released, the UE and eNB stores the information (context for this eNB + context identifier noted context id).

In an example, the information for an eNB is stored even when the UE goes connected in another eNB. The UE may thus store the contexts for several cells.

In an example, when the UE context is maintained, the next time the UE goes connected in the same eNB, the UE only provides the context id, as illustrated in figure 5. This UE context allows the communication to continue from where it left off.

Following steps are illustrated in figure 5:
- Connection request sent by UE to eNB (containing context id)
- Bearer establishment between eNB and S-GW
- Bearer connection established between UE and S-GW
- RRC connection release
- UE retains context for this eNB + context id
- eNB retains context for this UE + context id.

Examples of the present disclosure are in particular beneficial in the context of the small data transmission for M2M devices and smartphones. They both generate small packets, either frequently or infrequently, so the level of signaling associated with these communication would make it very inefficient. It would also load the network elements, especially the MME. Examples of the present disclosure in particular avoid such drawbacks.

Examples of the present disclosure also enable to speed up bearer establishment, and are therefore also beneficial in the context of push to talk kind of applications which is especially needed in public safety applications.

Examples of the present disclosure will be described hereinafter, in the context of connectionless transmission mode in the sense that no connection is established between UE and MME although an RRC connection may be established.

In an example, it is proposed that the eNB and the UE retain the security context they establish upon an initial visit for a configurable/tunable time so as to minimize the number of eNB/MME interactions to establish security context for connectionless data.

Connectionless data transmission is based on the principle of providing information to the UE about the end-point of the PDN Connection in the SGW. The UE can then append this information to small data that is sent UL to the eNB. The eNB uses the appended information and creates a GTP-U PDU and passes the small data packet on the S1-U to the SGW. The SGW forwards the received packet uplink as normal. To allow subsequent DL small data, the eNB also appends its DL TEID and IP address to the GTP-U PDU in an extension header. The SGW stores and uses this information for any subsequent DL small data.

Connectionless mode procedures are also defined over the radio interface for allocation of radio resources to the UE and user data transmission, without the need to send a RRC connection request or a Service Request message to the MME (or SGSN) at every time the UE needs to send or receive data.

A possible way to do so can be based on the concept of context identifier information, hereinafter also called token, as outlined here below.

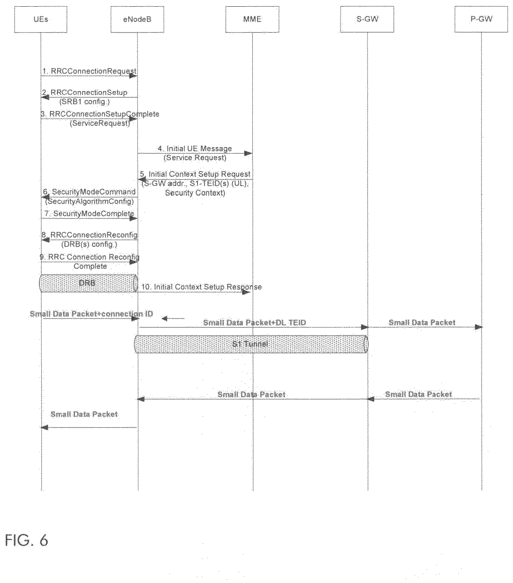

Today, the establishment of the security context happens during the Service Request procedure as highlighted in the message flow of figure 6, showing the Service Request procedure executed to set up security before connectionless data was sent (not using examples of the present disclosure).

The procedure for RRC connection re-establishment within the Service Request procedure illustrated in figure 6 comprises following steps:
1. UE sends to eNB an RRC Connection Request message
2. eNB sends to UE an RRC Connection Setup message containing SRB1 (Signalling Radio Bearer)
3. UE sends to eNB an RRC Connection Setup Complete message containing a Service Request,
4. eNB sends to MME an Initial UE message containing the Service Request,
5. MME sends to eNB an Initial Context Setup Request message containing S-GS address, S1-TEID(s) UL, Security Context,
6. eNB sends to UE a Security Mode Command message containing Security Algorithm configuration
7. UE sends to eNB a Security Mode Complete message
8. eNB sends to UE an RRC Connection Reconfiguration message containing DRB config. (configuration of Data Radio Bearer(s))
9. UE sends to eNB an RRC Connection Reconfiguration Complete message.

Once DRB is established, the eNB can send Initial Context Setup Response to the MME.

A small data packet (together with a connection identifier noted connection Id) can then be sent in uplink by UE to eNB using the DRB, and then forwarded (together with Downlink Tunnel Endpoint Identifier DL TEID) by the eNB to the SGW using the S1 tunnel. A small data packet can also be sent in downlink.

It is in step 6 and 7 where the UE and eNB set up and initialize the security algorithm. Clearly the need to do so at every small data transmission defeats the purpose of the connectionless scheme. In fact, even if the UE remains in the same eNB and it goes to idle mode, this procedure is fully executed as the UE and eNB are supposed to establish security afresh. This is clearly wasteful.

In an example, it is therefore proposed to make the way security is handled more efficient, in that the eNB and the UE need to establish security only when strictly needed (i.e upon first visit or when the UE and eNB network so not any longer share a valid security context, e.g. because the security material expires (due to an aging process).

This can be possible if at the time when the UE and eNB set up security in steps 6 and 7 in figure 6 they exchange a "token" which is unique per UE and eNB pair over the expected lifetime of the context. The lifetime of the context may also be exchanged at the same time. This token can also be used as a reference to a broader set of information like the UE capabilities and other UE context information that the eNB may retain between subsequent UE accesses to eNB resources.

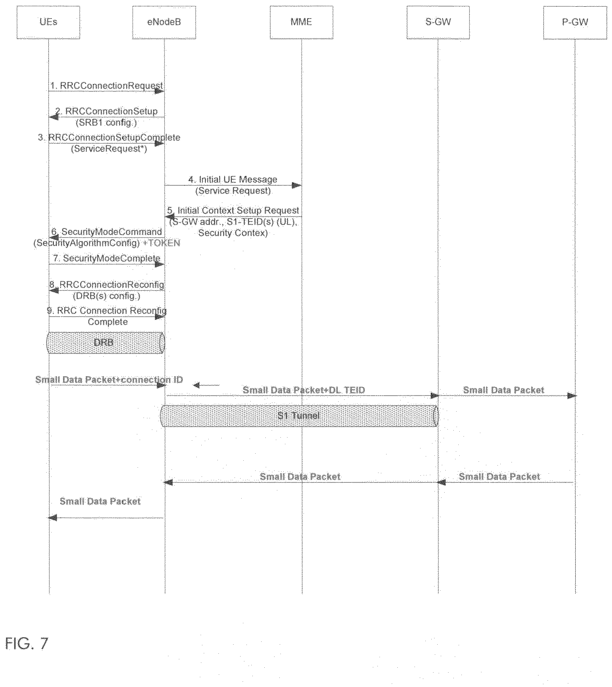

In an example, the UE at first visit with eNB or when the security context for a ENB is not known / valid, executes a full Service Request procedure as outlined in figure 7, where at steps 6 and 7 the UE and eNB exchange also a token value to be used as a future reference to the UE context in the eNB, and possibly the eNB provides the UE also with a timer value, used to age the token and the context. The Token may be contained in the Security Mode Command or any other message sent by eNB to UE.

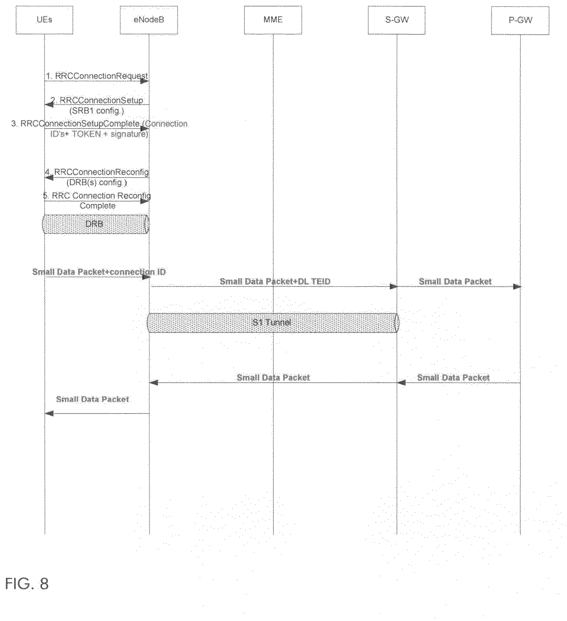

At a subsequent visit to the eNB, the UE does not need to execute the full Service Request procedure as long as it passes a valid token to the eNB, as depicted in figure 8.

With this in mind, the procedure to send an UL packet once the token is acquired (starting from idle mode) can be as illustrated in figure 8.

The procedure for RRC connection re-establishment, within the procedure for connection re-establishment illustrated in figure 8, then comprises following steps:
1. UE sends to eNB an RRC Connection Request message
2. eNB sends to UE an RRC Connection Setup message containing SRB1 (Signalling Radio Bearer)
3. UE sends to eNB an RRC Connection Setup Compete message containing Connection ID's, and the token for the eNB
4. eNB sends to UE an RRC Connection Reconfiguration message containing DRB config. (configuration of Data Radio Bearer(s))
5. UE sends to eNB an RRC Connection Reconfiguration Complete message.

In an example, it is assumed the UE reads the eNB ID on the broadcast channel and then sends the related token in the RRC connectionset up complete message. The UE also passes in the RRC ConnectionSetupComplete message all the connection ID's of the connectionless PDN's or bearers that it intends to possibly use so that the eNB's configures them and it ready to receive the related packets over related DRB's.

In an example, the token could be sent over any communication between UE and eNB, over control plane messages or over user plane.

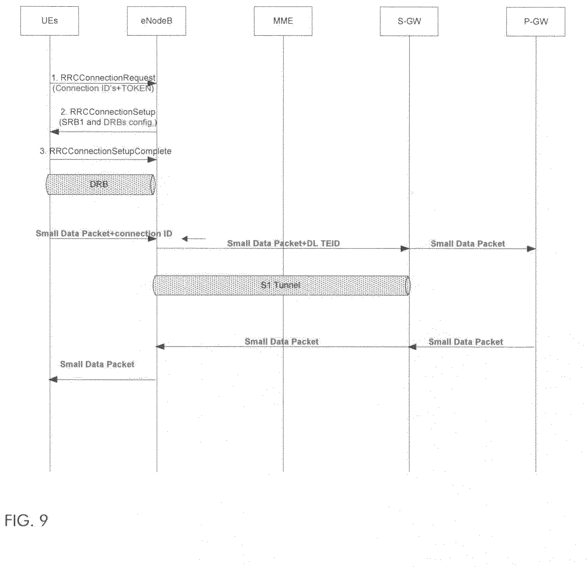

In an example, a further optimization may be achieved by piggybacking DRB establishment and RRC signalling connection establishment as shown in figure 9.

The procedure for RRC connection re-establishment, within the procedure for connection re-establishment illustrated in figure 9, then only comprises following steps:
1. UE sends to eNB an RRC Connection Request message containing Connection ID's + Token
2. eNB sends to UE an RRC Connection Setup message containing SRB1 (Signalling Radio Bearer) and DRB config. (configuration of Data Radio Bearer(s))
3. UE sends to eNB an RRC Connection Setup Complete message.

In an example, in all these procedures, if by any chance the UE has provided a non-existent or invalid token value, then the eNB rejects the RRC connection establishment with a cause code requesting the UE to go ahead wityh a full service request procedure as if it was the first visit to the eNB. As a result it will issue a security mode command to the UE and generate a new token, or reject the UE depending on the outcome of the interaction with the MME, which may include NAS authentication/security procedures (as defined in clause 5.3.10 of TS 23.401). In fact, when due to aging a security context elapses, this is removed from the cache in the eNB and when the UE attempt to use it, it is detected as invalid so the UE will remove it from the cache and require any UE submitting this token to perform the full Service Request procedure as per figure 6. So in principle the UE may or may not be provided the timer associated to aging of tokens, and the scheme still works fine.

It should be clear then by now that if the eNB keeps a cache of UE contexts indexed by the token values it provides (unique per eNB) and the UE keeps a cache of tokens+security contexts per eNB, then the need for full SR procedures is minimized. As UE's used for MTC may be static, this is particularly efficient for MTC devices as the UE would seldom have to resort to a full service request procedure (provided the token validity is set to be long enough). Also the mobility patterns of most users do repeat themselves frequently and also include long periods during which the users are static, so this mechanism results to be particularly effective when taking this into account.

In an example, the DRB's established in this way can be are active a specific activity timer after which, if no data is transmitted, the RRC connection is released and the UE needs to submit again the token as in figure 8 or execute the full service request procedure if the token is no longer valid, to obtain another RRC connection established.

In an example, when the UE has to send larger volume of data or stay connected for a long period, the normal service request procedure is used. This can be initiated directly by the UE itself on knowledge that larger volume of data is to be sent etc. or on instruction from the eNB.

In an example, in connectionless connections case, also, if the UE moves to another eNB when the RRC connection activity timer has not yet elapsed, the UE however consider itself in the new eNB as if it was transitioning to active state in that eNB and therefore it will execute the procedure in figure 8.

A person of skill in the art would readily recognize that steps of various above-described methods can be performed by programmed computers. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

## Claims

1. A method for optimization of user equipment context management in a mobile communication system wherein a connection referred to as radio resource control connection between a user equipment and a radio access network node can be released at transition from active state to idle state and re-established at transition back from idle state to active state, the method wherein a user equipment context is maintained at said user equipment and at said radio access network node upon release of said radio resource control connection, said user equipment context being identified by context identifier information shared by said user equipment and said radio access network node, said method comprising:
- said radio access network node receiving said context identifier information from said user equipment upon said user equipment sending a request for re-establishment of said radio resource control connection to said radio access network node,
**characterized by**, upon reception of said request for re-establishment of said radio resource control connection from said user equipment, if context identifier information provided by said user equipment is invalid, said radio access network node requesting said user equipment to perform a connection establishment procedure referred to as normal connection establishment procedure whereby said radio access network node does not continue a secure connection and initiates a security procedure during re-establishment of said radio resource control connection.

2. A method according to claim 1, wherein the user equipment context is maintained at said user equipment and at said radio access network node upon: release of said radio resource control connection between said user equipment and said radio access network node, release of a signalling connection between said user equipment and a core network node interfacing with said radio access network node in the control plane, and release of a connection between said radio access network node and said core network node for said user equipment.

3. A method according to claim 1 or 2, wherein:
- said user equipment context includes at least a security context.

4. A method according to any of claims 1 to 3, comprising:
- upon reception of said request for re-establishment of said radio resource control connection from said user equipment with valid context identifier information, said radio access network node continuing the secure connection without initiating the security procedure during said re-establishment of said radio resource control connection.

5. A radio access network node, configured for optimization of user equipment context management in a mobile communication system wherein a connection referred to as radio resource control connection between a user equipment and a radio access network node can be released at transition from active state to idle state and re-established at transition back from idle state to active state, wherein a user equipment context is maintained at said user equipment and at said radio access network node upon release of said radio resource control connection, said user equipment context being identified by context identifier information shared by said user equipment and said radio access network node, said radio access network node configured to:
- receive said context identifier information from said user equipment upon said user equipment sending a request for re-establishment of said radio resource control connection to said radio access network node,
**characterized by**, upon reception of said request for re-establishment of said radio resource control connection from said user equipment, if context identifier information provided by said user equipment is invalid, said radio access network node requesting said user equipment to perform a connection establishment procedure referred to as normal connection establishment procedure whereby said radio access network node does not continue a secure connection and initiates a security procedure during re-establishment of said radio resource control connection.

6. A radio access network node according to claim 5, wherein the user equipment context is maintained at said user equipment and at said radio access network node upon: release of said radio resource control connection between said user equipment and said radio access network node, release of a signalling connection between said user equipment and a core network node interfacing with said radio access network node in the control plane, and release of a connection between said radio access network node and said core network node for said user equipment.

7. A radio access network node according to claim 5 or 6, wherein:
- said user equipment context includes at least a security context.

8. A radio access network node according to any of claims 6 to 7, configured to:
- upon reception of the request for re-establishment of said radio resource control connection from said user equipment with valid context identifier information, continue the secure connection without initiating a security procedure during said re-establishment of said radio resource control connection.

## Patentansprüche

1. Verfahren zur Optimierung von User Equipment Kontextverwaltung in einem Mobilkommunikationssystem, wobei eine Verbindung, die als eine Radio Resource Control Verbindung bezeichnet wird, zwischen einem User Equipment und einem Radio Access Network Knoten beim Übergang vom aktiven Zustand in den inaktiven Zustand freigegeben und beim Übergang zurück vom inaktiven Zustand in den aktiven Zustand wiederhergestellt werden kann, wobei in dem Verfahren ein User Equipment Kontext an dem User Equipment und an dem Radio Access Network Knoten bei der Freigabe der Radio Resource Control Verbindung behalten wird, wobei der User Equipment Kontext durch Kontextkennungsinformationen identifiziert wird, die durch das User Equipment und den Radio Access Network Knoten gemeinsam verwendet werden, wobei das Verfahren Folgendes umfasst:
- Empfangen der Kontextkennungsinformationen von dem User Equipment durch den Radio Access Network Knoten, wenn das User Equipment eine Anforderung zur erneuten Herstellung der Radio Resource Control Verbindung mit dem Radio Access Knoten sendet,
**dadurch gekennzeichnet, dass** beim Empfang der Anforderung zur Wiederherstellung der Radio Resource Control Verbindung von dem User Equipment, wenn die von dem User Equipment bereitgestellten Kontextkennungsinformationen ungültig sind, der Radio Access Network Knoten von dem User Equipment anfordert, eine Verbindungsherstellungsprozedur durchzuführen, die als normale Verbindungsherstellungsprozedur bezeichnet wird, wodurch der Radio Access Network Knoten eine sichere Verbindung nicht fortsetzt und bei der Wiederherstellung der Radio Resource Control Verbindung eine Sicherheitsprozedur einleitet.

2. Verfahren nach Anspruch 1, wobei der User Equipment Kontext an dem User Equipment und an dem Radio Access Network Knoten behalten wird, beim:
Freigeben der Radio Resource Control Verbindung zwischen dem User Equipment und dem Radio Access Network Knoten, Freigeben einer Signalisierungsverbindung zwischen dem User Equipment und einem Kernnetzknoten, der eine Schnittstelle mit dem Radio Access Network Knoten in der Steuerebene bildet, und Freigeben einer Verbindung zwischen dem Radio Access Network Knoten und dem Kernnetzknoten für das User Equipment.

3. Verfahren nach Anspruch 1 oder 2, wobei:
- der User Equipment Kontext mindestens einen Sicherheitskontext umfasst.

4. Verfahren nach Anspruch 1 bis 3, das Folgendes umfasst:
- beim Empfang der Anforderung zur Wiederherstellung der Radio Resource Control Verbindung von dem User Equipment mit gültigen Kontextkennungsinformationen, Fortsetzen der sicheren Verbindung durch den Radio Access Network Knoten ohne Einleiten der Sicherheitsprozedur während der Wiederherstellung der Radio Resource Control Verbindung.

5. Radio Access Network Knoten, der zur Optimierung von User Equipment Kontextmanagement in einem Mobilkommunikationssystem ausgestaltet ist, wobei eine Verbindung, die als Radio Resource Control Verbindung bezeichnet wird, zwischen einem User Equipment und einem Radio Access Network Knoten beim Übergang vom aktiven Zustand in den inaktiven Zustand freigegeben und beim Übergang zurück vom inaktiven Zustand in den aktiven Zustand wiederhergestellt werden kann, wobei ein User Equipment Kontext bei dem User Equipment und an dem Radio Access Network Knoten bei der Freigabe der Radio Resource Control Verbindung behalten wird, wobei der User Equipment Kontext durch Kontextkennungsinformationen identifiziert wird, die durch das User Equipment und den Radio Access Network Knoten gemeinsam verwendet werden, wobei der Radio Access Network Knoten ausgestaltet ist zum:
- Empfangen der Kontextkennungsinformationen von dem User Equipment beim Senden einer Anforderung zur Wiederherstellung der Radio Resource Control Verbindung mit dem Radio Access Network Knoten durch das User Equipment,
**dadurch gekennzeichnet, dass** beim Empfang der Anforderung zur Wiederherstellung der Radio Resource Control Verbindung von dem User Equipment, wenn Kontextkennungsinformationen, die durch das User Equipment bereitgestellt werden, ungültig sind, der Radio Access Network Knoten beim User Equipment das Durchführen einer Verbindungsherstellungsprozedur anfordert, die als eine normale Verbindungsherstellungsprozedur bezeichnet wird, wodurch der Radio Access Network Knoten eine sichere Verbindung nicht fortsetzt und während der Wiederherstellung der Radio Resource Control Verbindung eine Sicherheitsprozedur einleitet.

6. Radio Access Network Knoten nach Anspruch 5, wobei der User Equipment Kontext an dem User Equipment und an dem Radio Access Network Knoten behalten wird bei: Freigabe der Radio Resource Control Verbindung zwischen dem User Equipment und dem Radio Access Network Knoten, Freigabe einer Signalisierungsverbindung zwischen dem User Equipment und einem Kernnetzknoten, der eine Schnittstelle mit dem Radio Access Network Knoten in der Steuerebene bildet, und Freigabe einer Verbindung zwischen dem Radio Access Network Knoten und dem Kernnetzknoten für das User Equipment.

7. Radio Access Network Knoten nach Anspruch 5 oder 6, wobei:
- der User Equipment Kontext mindestens einen Sicherheitskontext umfasst.

8. Radio Access Network Knoten nach einem der Ansprüche 6 bis 7, der ausgestaltet ist zum:
- beim Empfang der Anforderung zur Widerherstellung der Radio Resource Control Verbindung von dem User Equipment mit gültigen Kontextkennungsinformationen, Fortsetzen der sicheren Verbindung ohne Einleiten einer Sicherheitsprozedur während der Wiederherstellung der Radio Resource Control Verbindung.

## Revendications

1. Procédé d'optimisation de la gestion de contexte d'équipement utilisateur dans un système de communication mobile, dans lequel une connexion, appelée connexion de commande de ressources radio, entre un équipement utilisateur et un noeud de réseau d'accès radio peut être libérée lors d'une transition d'un état actif à un état au repos, et rétablie lors d'une transition de nouveau de l'état au repos à l'état actif, procédé dans lequel un contexte d'équipement utilisateur est maintenu au niveau dudit équipement utilisateur et dudit noeud de réseau d'accès radio à la libération de ladite connexion de commande de ressources radio, ledit contexte d'équipement utilisateur étant identifié par des informations d'identifiant de contexte partagées par ledit équipement utilisateur et ledit noeud de réseau d'accès radio, ledit procédé comprenant les étapes suivantes :
- ledit noeud de réseau d'accès radio reçoit lesdites informations d'identifiant de contexte en provenance dudit équipement utilisateur à l'envoi, par ledit équipement utilisateur, d'une demande de rétablissement de ladite connexion de commande de ressources radio audit noeud de réseau d'accès radio,
**caractérisé en ce que**, à la réception de ladite demande de rétablissement de ladite connexion de commande de ressources radio en provenance dudit équipement utilisateur, si les informations d'identifiant de contexte fournies par ledit équipement utilisateur ne sont pas valides, ledit noeud de réseau d'accès radio demande audit équipement utilisateur d'effectuer une procédure d'établissement de connexion appelée procédure d'établissement de connexion normale, par laquelle ledit noeud de réseau d'accès radio ne poursuit pas une connexion sécurisée et initie une procédure de sécurité lors du rétablissement de ladite connexion de commande de ressources radio.

2. Procédé selon la revendication 1, dans lequel le contexte d'équipement utilisateur est maintenu au niveau dudit équipement utilisateur et dudit noeud de réseau d'accès radio :
à la libération de ladite connexion de commande de ressources radio entre ledit équipement utilisateur et ledit noeud de réseau d'accès radio, à la libération d'une connexion de signalisation entre ledit équipement utilisateur et un noeud de réseau central en interface avec ledit noeud de réseau d'accès radio dans le plan de commande, et à la libération d'une connexion entre ledit noeud de réseau d'accès radio et ledit noeud de réseau central pour ledit équipement utilisateur.

3. Procédé selon la revendication 1 ou 2, dans lequel :
- ledit contexte d'équipement utilisateur comporte au moins un contexte de sécurité.

4. Procédé selon l'une des revendications 1 à 3, comprenant :
- à la réception de ladite demande de rétablissement de ladite connexion de commande de ressources radio en provenance dudit équipement utilisateur avec des informations d'identifiant de contexte valides, ledit noeud de réseau d'accès radio poursuit la connexion sécurisée sans initier de procédure de sécurité lors dudit rétablissement de ladite connexion de commande de ressources radio.

5. Noeud de réseau d'accès radio, configuré pour l'optimisation de la gestion de contexte d'équipement utilisateur dans un système de communication mobile, dans lequel une connexion, appelée connexion de commande de ressources radio, entre un équipement utilisateur et un noeud de réseau d'accès radio peut être libérée lors d'une transition d'un état actif à un état au repos, et rétablie lors d'une transition de nouveau de l'état au repos à l'état actif, dans lequel un contexte d'équipement utilisateur est maintenu au niveau dudit équipement utilisateur et dudit noeud de réseau d'accès radio à la libération de ladite connexion de commande de ressources radio, ledit contexte d'équipement utilisateur étant identifié par des informations d'identifiant de contexte partagées par ledit équipement utilisateur et ledit noeud de réseau d'accès radio, ledit noeud de réseau d'accès radio étant configuré pour :
- recevoir lesdites informations d'identifiant de contexte en provenance dudit équipement utilisateur à l'envoi, par ledit équipement utilisateur, d'une demande de rétablissement de ladite connexion de commande de ressources radio audit noeud de réseau d'accès radio,
**caractérisé en ce que**, à la réception de ladite demande de rétablissement de ladite connexion de commande de ressources radio en provenance dudit équipement utilisateur, si les informations d'identifiant de contexte fournies par ledit équipement utilisateur ne sont pas valides, ledit noeud de réseau d'accès radio demande audit équipement utilisateur d'effectuer une procédure d'établissement de connexion appelée procédure d'établissement de connexion normale, par laquelle ledit noeud de réseau d'accès radio ne poursuit pas une connexion sécurisée et initie une procédure de sécurité lors du rétablissement de ladite connexion de commande de ressources radio.

6. Noeud de réseau d'accès radio selon la revendication 5, dans lequel le contexte d'équipement utilisateur est maintenu au niveau dudit équipement utilisateur et dudit noeud de réseau d'accès radio : à la libération de ladite connexion de commande de ressources radio entre ledit équipement utilisateur et ledit noeud de réseau d'accès radio, à la libération d'une connexion de signalisation entre ledit équipement utilisateur et un noeud de réseau central en interface avec ledit noeud de réseau d'accès radio dans le plan de commande, et à la libération d'une connexion entre ledit noeud de réseau d'accès radio et ledit noeud de réseau central pour ledit équipement utilisateur.

7. Noeud de réseau d'accès radio selon la revendication 5 ou 6, dans lequel :
- ledit contexte d'équipement utilisateur comporte au moins un contexte de sécurité.

8. Noeud de réseau d'accès radio selon l'une des revendications 6 et 7, configuré pour :
- à la réception de la demande de rétablissement de ladite connexion de commande de ressources radio en provenance dudit équipement utilisateur avec des informations d'identifiant de contexte valides, poursuivre la connexion sécurisée sans initier de procédure de sécurité lors dudit rétablissement de ladite connexion de commande de ressources radio.
